# EUROPEAN PATENT SPECIFICATION

(11) **EP 4 185 118 B1**
(45) Date of publication and mention of the grant of the patent: **10.04.2024**
(21) Application number: 21749356.8
(22) Date of filing: 21.07.2021
(51) Int. Cl.: A23C 19/05, A23C 19/06, A23C 19/068, A23C 19/09

(54) **METHOD OF MAKING CHEESE**
VERFAHREN ZUR HERSTELLUNG VON KÄSE
PROCÉDÉ DE FABRICATION DE FROMAGE

(30) Priority: 22.07.2020 EP 20187250
(43) Date of publication of application: 31.05.2023
(73) Proprietor: Dairy Protein Cooperation Food B.V., 2411 HS Bodegraven (NL)
(72) Inventor: LAVRIJSEN, Bas Willem Maarten, 2411 HS Bodegraven (NL); PENDERS, Johannes Antonius, 2411 HS Bodegraven (NL)
(74) Representative: V.O.
(86) International application number: PCT/NL2021/050464
(87) International publication number: WO 2022/019761

(56) References cited:
- WO-A1-02/30210
- WO-A1-2008/063084
- WO-A1-2012/091562
- WO-A1-2020/011975
- US-A1- 2006 057 249

## Description

### Field of the invention

The invention relates to a method of making cheese from a high-solids casein-containing oil-in-water emulsion, particularly high-solids cheese milk.

### Background

Cheese making is a long-existing process. Many types of cheese are known, each having its own specific production process. Generally, the basic steps in cheese making comprise: providing a cheese-making liquid (cheese milk); adding starter cultures; adding a coagulant (typically rennet type enzymes); inducing the milk to form a gel (curd); cutting the curd so as to bring about syneresis, resulting in liquid (whey) being pressed out of the curd; and removing the whey from the curd. Usual further steps comprise the addition of salt, and ripening.

The curd is formed as a result of coagulation of caseins by proteolytic actions of the coagulant, supported by the acidification from the starter cultures. The syneresis is further enhanced by adding warm washing water; the heat is accelerating the syneresis and the water washes out the lactose in the curd to control the desired pH of the cheese. Both aspects contribute to whey being pressed out of the curd.

Traditionally, for centuries, cheese has been made from native milk, thereby effectively resulting in the preservation of milk ingredients (chiefly caseins and fat) in a concentrated form, viz., as cheese. Water and water-soluble components are largely removed with the whey, including most of the soluble whey proteins.

In the twentieth century, various industrial processes of making cheese have been developed, whereby milk is subjected to one or more treatments before further being processed into cheese. A relatively recent technology is based on microfiltration (MF) of milk. Taking into account a wide range of possible pore sizes (0.1-12 µm), MF can be used to separate several components from milk and other dairy fluids. Small pore size (~0.1 µm) MF has been used for the partial removal of whey proteins, as well as lactose and further soluble components (such as minerals, ash, citric acid) from milk. This results in an MF retentate with an increased dry matter content, particularly in native micellar casein. This retentate can be typically used for the casein enrichment of cheese milk to increase the dry matter content.

A background reference relating to making cheese from high-solids milk, is WO 2020/011975. Herein milk of up to 25% solids is considered suitable for making cheese, whereby the higher solids content typically results from an MF treatment. The disclosure addresses an issue with the increased content of micellar casein in cheese milk, viz. an enhanced rate of coagulation, and consequently an increased gel strength. The disclosure indicates that this makes it very difficult, especially in an industrial setting, to determine when the desired point in the coagulation process is reached. As a consequence, a major loss of fat and protein to the whey fraction can occur which results in a lower overall yield. A further drawback of the shortened clotting time and/or firmer gel relates to technical / mechanical difficulties during processing and/or cutting using conventional curd manufacturing equipment. WO2020/011975 seeks to address this by adding a small amount of non-micellar casein, in order to reduce the rate of gel formation of casein-enriched milk. The teaching of this reference is limited to affecting coagulation, it does not teach any modification of cheese making steps.

Another reference that addresses making cheese from high-solids milk, is WO 2012/091562. In an embodiment, the disclosed process involves first concentrating milk, e.g. to at least 35% solids, and then subjecting the concentrated milk to coagulation. Thereby a hot isostatic pressure treatment is conducted on the concentrated milk prior to coagulation. Herein the objective, especially for low-fat cheese, is to retain a higher moisture content in the cheese, yet without thereby obtaining an undesirable softer texture.

The present invention seeks to provide a method to produce cheese from high solids milk, without requiring particular additives, such as in WO 2020/011975, or special processing techniques, such as in WO 2012/091562.

### Summary of the invention

The invention, in one aspect, presents a method of making cheese, the method comprising providing a cheese-forming liquid, acidifying the cheese-forming liquid, subjecting the cheese-forming liquid to enzymatic coagulation to obtain a gel, cutting the gel so as to obtain a composition comprising curd particles, allowing the curd particles to form a curd block, and allowing the curd block to ripen into cheese, wherein the cheese-forming liquid is a high-solids casein-containing oil-in-water emulsion having a dry-matter solids content of 15 wt.% to 40 wt.%; the method comprising adding an amount of 5 wt. to 40 wt.% of water onto the gel before and/or during the cutting.

### Detailed description of the Invention

In a broad sense, the invention pertains to the judicious insight that adding water onto a cheese gel is a critical step in making cheese from a high solids cheese-making liquid. Without wishing to be bound by theory, the inventors believe that this water presents a carrier liquid for the curd particles that result from cutting, and that such a carrier liquid is instrumental in allowing the processing of curd particles. The water can be added onto any part of the outer surface of the cheese gel. Generally, it will be the most practical to add the water on top of the cheese gel.

It is hereby noted that the addition of water at this stage is quite the opposite of traditional cheese manufacturing. Traditional processes are based on the syneresis occurring while cutting a cheese gel (i.e. the curd). This results in liquid (whey) being pressed out of the curd; this is enhanced by the addition of warm washing water; this aids the process by acting as a carrier liquid for curd particles and it serves to wash out lactose of the curd in order to set the desired higher pH of the final cheese (otherwise the bacteria used will convert lactose into lactic acid). Further, in conjunction with the renneting temperature, the generally elevated temperature of the washing water helps the syneresis of the curd, thus serving to control the amount of moisture of the cheese. A regular next step is removing the whey (partly coming from the syneresis of the curd and partly from the added washing water) from the curd.

The foregoing insight can be put to use in making cheese on the basis of a cheese-forming liquid having a much higher dry matter solids content than hitherto possible. Surprisingly, the aforementioned step of adding water onto the cheese gel makes it possible to coagulate from a high solids cheese-forming liquid, yet in standard cheese making equipment, such as conventional open cheese vats, a "double o" type open curd-making vats, closed variants thereof, or tiltable cheese curd vats.

As acknowledged in WO 2020/011975, a problem exists when making cheese from cheese milk having an increased dry matter content. This problem is associated with the observation that an increased content of micellar casein enhances the rate of coagulation, and results in an increased gel strength. This narrows the process window available for cutting the curd: if this is done too early, when the curd is soft, such cutting will result in an increased loss of fat and curd fines. This would in fact lower the overall yield. Cutting when the curd is too firm, will lead to various different problems. E.g., the cutting tools may not be capable of cutting such curd, or cutting will result in tearing apart the curd, with resulting loss of yield.

In this description, the term cheese-forming liquid is used to indicate a liquid that is suitable to be subjected to a cheese making process comprising acidification, particularly by using starter bacteria, and enzyme-induced coagulation, particularly by rennet.

In a most general sense, such cheese-forming liquid is a casein-containing oil-in-water emulsion. Thereby the casein content will generally be in a range of from 5 % by weight to 20% by weight, such as 7.5% by weight to 15% by weight, preferably 8% by weight to 10% by weight. The term "casein" is known to the skilled person, and refers to a family of phosphoproteins (αS1, αS2, β, κ) that account for the majority of non-human mammalian milk proteins (e.g. nearly 80% of bovine milk proteins). Casein is believed to occur in a micellar form, with κ-casein molecules serving to stabilize its structure. In fact, the casein in the cheese-forming liquid of the invention will generally comprise at least 80 % by weight of micellar casein, such as at least 90% by weight of micellar casein, such as 95% by weight to 100% by weight of micellar casein of total proteins.

Preferably, the high-solids cheese-forming liquid applied in the invention is obtained from milk produced by any dairy animal. This is mostly cattle, and particularly cow (adult female cattle), but in addition to cattle, the following animals provide milk used by humans for dairy products: camels, donkeys, goats, horses, reindeer, sheep, water buffalo, yaks, and moose. Most preferably, the milk used to provide a cheese-forming liquid in the process of the invention is cow's milk or goat's milk. The cheese-forming liquid can thereby comprise one or more of skim milk, whole milk and/or cream.

The cheese-forming liquid can also be prepared from a vegetable oil, to which milk proteins, and particularly casein, are added.

Preferably, the cheese made by the process of the invention is a natural cheese according to the definition in the *Codex Alimentarius.* Typically, such natural cheese is the ripened or unripened soft, semi-hard, hard, or extra-hard product, which may be coated, and in which the whey protein/casein ratio does not exceed that of milk, obtained by (a) coagulating wholly or partly the protein of cheese milk (milk, skimmed milk, partly skimmed milk, cream, whey cream or buttermilk, dissolved skimmed milk powder, dissolved full fat milk powder, MPC's (milk protein concentrates), retentates of milk ultrafiltration, retentates of milk microfiltration, or any combinations of these materials), through the action of rennet or other suitable coagulating agents.

Fat present in the cheese-forming liquid, i.e., the oil component of the oil in water emulsion, will generally be milk fat. It is also possible to substitute, partially or entirely, vegetable oil for the milk fat.

In a preferred embodiment, the fat components in the cheese-forming liquid comprise at least 50% by weight of milk fat, such as at least 75% by weight of milk fat, such as at least 90% by weight of milk fat, preferably 95% by weight to 100% by weight of milk fat. As a general preference, the fat components in the cheese-forming liquid consist essentially of milk fat, and more preferably the fat components in the cheese-forming liquid consist of milk fat. Thereby the exact composition of the milk fat may differ depending on the source of the milk (which type of cattle, also depending on the season). It is hereby noted that in making cheese according to regulatory requirements, the amount and nature of the fat are generally standardized.

Generally, when starting from natural milk from a dairy animal, preferably cow or goat, the milk will first be at least partly skimmed, and the resulting skim milk and full fat milk will be subjected to separate processing. Such processing of the milk will, e.g., be a mild heat treatment of skim milk and/or full fat milk, such as pasteurization. Ultimately, a cheese-forming liquid is provided in which skim milk and full fat milk are combined.

Generally a desired fat percentage is set by combining skimmed milk (generally comprising less than 10% of the fat content of full-fat milk, preferably entirely decreamed) and full-fat milk. Therein the full-fat milk can typically be present in a range from 0% to 60%, such as up 10%, up to 20%, or up to 30%, which generally reflect low-fat cheeses, or such as up to 40%, up to 50% or up to 60% which generally reflect full-fat cheeses.

In addition to the milk fat, or in lieu thereof, the cheese-forming liquid may comprise a vegetable fat. This is preferably done in order to increase the relative amount of triglycerides of one or more unsaturated fatty acids. The fatty acids thereby can be mono-unsaturated, poly-unsaturated, or they may comprise a mixture of one or more mono-unsaturated fatty acids and one or more poly-unsaturated fatty acids. Alternatively, a modified milk fat emulsion can be applied, which can be obtained by fractionating milk fat so as to retain the more unsaturated fat fraction thereof. For further guidance on the foregoing embodiments, reference is made to WO 2012/091562.

As noted above, the invention pertains to making cheese specifically from a cheese-forming liquid that can be defined as being a high-solids casein-containing oil-in-water emulsion. The term "high-solids" hereby refers to a dry-matter solids content above that of natural cow's milk, which is about 12% by weight. The cheese-forming liquid applied in the method of the invention has a dry-matter solids content of 15 wt.% to 40 wt.%. The term "dry matter solids" thereby refers to all solids that will remain after evaporation of water (as has been laid down in the respective ISO and DIN norms). These solids generally comprise both fat and non-fat solids, such as proteins, fat, lactose and ash/salts.

In particular, the present method makes it surprisingly possible to produce cheese from a high-solids cheese milk having a dry matter solids content of above 13wt.%, such as of from 15 wt.% to 40 wt.%, preferably 15 wt.% to 25 wt.%. Such dry matter will generally be composed of fat, such as milk fat and/or vegetable fat, proteins, such as casein and possibly including vegetable protein and a remaining small amount of whey protein, as well as starch and/or carbohydrate fibers.

Without wishing to be bound by theory, the inventors believe that the existing difficulties with making cheese of cheese milk having an increased dry matter solids content, occur in the event of an increased casein content. The present method makes it surprisingly possible to produce cheese, particularly from a high-solids cheese milk as mentioned above, from cheese milk having a casein content of from 5 wt.% to 20 wt.% of casein. It will be understood that the fat content will differ, depending on whether low fat, full-fat, or cream-cheese is made.

In currently known cheese-making processes, using regular cheese-making equipment, the cheese yield is generally 10 to 12 kg of cheese per 100 kg of milk. In the event of using more concentrated milk, the process of the invention allows obtaining a cheese yield which is increased to as high as up to, e.g., 50 kg cheese per 100 kg of such concentrated milk, even in standard cheese making equipment. In such equipment, prior art processes will allow up to, at most, a cheese yield 20 kg per 100 kg of concentrated cheese milk.

It is noted that the composition of milk may have seasonal variations, and differs per dairy animal. E.g., cow's milk and goat's milk have about 12% by weight of dry matter solids, whilst sheep's milk has, on average, 19% by weight of dry matter solids.

The dry matter solids content of the cheese-forming liquid preferably is in a range of from 20% by weight to 35% by weight, more preferably of from 25% by weight to 30% by weight. Preferably, the cheese-forming liquid is made from bovine milk or goat milk.

It will be understood that a high-solids cheese-forming liquid is not native milk. Rather, also if made from milk from a single type of dairy animal, the cheese-forming liquid will be made from combined components thereof. Generally, the cheese-forming liquid is either made from milk as such, or from concentrated components of milk, or dry components of milk, to which then water is added to the extent desired. It is also possible to provide part of the cheese-forming liquid from milk as such, and part from added concentrated or dry milk components. The skilled person is well aware of the various methods to provide such a cheese-forming liquid, and will thus have no difficulty to adapt either the relative amount of components, or the amount of water, or both, in order to end up having a is a high-solids casein-containing oil-in-water emulsion having a dry-matter solids content of 15 wt.% to 40 wt.%, or as further specified hereinbefore.

E.g., a solids content higher than that of natural milk can be provided by concentrating the milk in an evaporation step. Preferably, in such an embodiment, the milk is skimmed before being subjected to evaporation.

Preferably, the solids content is increased specifically by providing an increased content of casein. This can be accomplished by using components obtained by microfiltration (MF) of natural milk, preferably of skimmed milk. MF will result in a filtrate (carrying soluble whey proteins and other soluble components, such as part of the lactose). The amount of soluble components removed depends, pro rata, with the Volume Concentration Factor (VCF). The VCF is a measure for the extent of the concentration obtained by microfiltration. By way of calculation example: in the event of a VCF of 4.0, the volume of the retentate is 25% of that of the incoming skimmed milk. Thus, if 10.000 kg of skimmed milk is subjected to MF at a VCF of 4.0, 2.500 kg of casein milk is obtained as a retentate, and 7.500 kg of native whey is obtained as a filtrate. A fully soluble component such as lactose will be divided accordingly, i.e., 75% of it will be in the native whey, and 25% of it will be in the casein milk. Components, such as whey proteins, that are not fully water-soluble will remain in the retentate to a higher extent (in the present example the whey proteins will typically be divided 50%/50% over the retentate and the filtrate).

The retentate is a concentrate mainly comprising casein preserved in the micellar state, containing colloidal calcium phosphate, and having a reduced content of milk serum proteins. A microfiltration membrane with pore size of from 0.05 µm to 0.25 µm, preferably of from 0.1 µm to 0.2 µm, such as approximately 0.1 µm, is typically chosen to allow separation of whey proteins from micellar casein (Carr and Golding 2016. In: McSweeney PLH, O'Mahony JA, editors. Advanced dairy chemistry. Vol. 1B: Proteins: applied aspects. 4th ed. Cork: Springer. p 35-66.). After microfiltration, the micellar casein may be spray-dried or used as liquid concentrate. The corresponding spray-dried powder is known as Micellar Casein Concentrate (MCC), which has a protein content higher than 50%, preferable 70%. It may also be referred to in the art as native phosphocaseinate, MCC, or micellar casein.

The desired increased solids content, preferably an increased content of casein (more specifically of micellar casein) can also be provided by other milk protein sources. These can be sources in which the natural ratio of casein to whey is preserved, such as Milk Protein Concentrate (MPC). This is a powder product or liquid concentrate usually prepared by ultrafiltration with an average protein content of over 30-35 weight %. Another alternative is Milk Protein Isolate (MPI), a powder product usually prepared by precipitation with an average protein content of more than 85 weight %.

MPCs are produced by heat-treating skim milk and concentrating the protein fractions, both the whey proteins and caseins, using membrane technology. Usually, MPC powder contains approximately 82% casein and 18% whey proteins based on the total protein content, which is the same ratio as in raw milk. Caseins are present in micellar structure and whey proteins in their native globular form or with some degree of denaturation due to the thermal treatment during processing. MPC powders are commercially available in protein concentrations ranging from 35% to 90% and are denominated accordingly: MPC40 contains 40% protein. Likewise, MPC can also be called milk protein isolate (MPI) when the amount of protein is higher than 80%.

Still further, the source of micellar casein can be (skimmed) concentrated milk.

Accordingly, in one embodiment the starting cheese milk comprises one or more of skim milk, whole milk and/or cream that is supplemented with one or more of Milk Protein Isolate (MPI), milk protein concentrate (MPC) and concentrated milk.

In another embodiment, the cheese-forming liquid comprises a conventional cheese milk supplemented with micellar casein isolate (MCI), milk protein concentrate (MPC) and/or concentrated milk. Preferably, it is a cheese milk supplemented with MCI. In a specific embodiment, the source of micellar casein comprises a casein-enriched retentate obtained by milk microfiltration, which is optionally diluted with water and/or whey. For example, fresh skim milk is subjected to a microfiltration process, in much the same process used to concentrate whey protein, to produce a pure, substantially undenaturated milk protein with its native structure. The resulting material contains between 90% and 95%, preferably more than 95% by weight of micellar casein based on total protein, the rest mainly being whey protein and other non-protein nitrogen and other constituents, such as lactose and inorganic salts, in particular calcium phosphate.

It will be understood that the cheese forming liquid comprises casein and fat. The fat content of cheese forming liquid can be adjusted as desired. Since the high solids casein-containing cheese making liquid used in the present process has a higher casein content than prior art cheese milk, the amount of fat to be added will accordingly also be higher. Generally, the ratio of fat to casein will be around 1, and may be higher, e.g. 1.05 to 1.25, such as 1.1 to 1.2, for full-fat cheese or lower, e.g., 0.75 to 0.95 such as 0.8 to 0.9 for low-fat cheese.

In order to start producing cheese, the pH of the cheese-forming liquid is lowered. This can be done by adding an edible acid, but acidification is preferably conducted by adding cultures of so-called starter bacteriae. This refers to bacteriae that produce acid, particularly lactic acid producing bacteriae. It is preferred to add a bacterial starter culture, such as *Lactococcus lactis* subspecies *cremoris* or *Lactococcus lactis* subspecies *lactis.* This leads to a fermentation of the cheese-forming liquid, whereby lactic acid is formed, thus resulting in acidification.

The pH to be reached before coagulation is allowed to take place, differs per type of cheese. E.g., for Gouda type cheese this generally is a pH of about 6, such as pH 5.9 to 6.3, typically a pH of 6.1. After the desired pH has been reached, a coagulating enzyme is added, typically rennet, also known as rennin or chymosin. Chymosin (EC3.4.23.4) is a proteolytic enzyme related to pepsin that is synthesized by chief cells in the stomach of some animals. Chymosin proteolytically cuts kappa casein, converting it into para-kappa-casein and CMP. Para-kappa-casein does not have the ability to stabilize the micellar structure and the calcium-insoluble caseins precipitate, forming a curd. Chymosin traditionally is extracted from dried calf stomachs, but the cheese making industry has expanded beyond the supply of available calf stomachs. In fact, also other proteases are capable of coagulating milk, by converting casein to para-casein and alternatives to chymosin are readily available. "Rennet" is the name given to any enzymatic preparation that clots milk. The major component of rennet is chymosin but in commercial preparations of rennet other proteases, typically bovine pepsin, are found in varying concentrations.

In prior art cheese making processes, Casein Macro Peptide (CMP), also known as GMP (glycomacropeptide) is cleaved from the casein protein as a result of the action of the rennet on κ-casein and about 90% of this CMP is typically removed with the whey. The hydrolysis of κ-casein leads to destabilization of the colloidal system of the milk. This is followed by aggregation of the casein micelles into clusters. Over time, the clusters grow in size. This growth in size is followed by crosslinking between chains which eventually transforms the milk into a gel or coagulum. Interestingly, with no whey removed, in cheese made according to the present process, a higher amount of CMP will still be present than in cheese not made according to the invention. Considering that in prior art cheesemaking about 90% of the CMP is removed with the whey, it will be understood that a cheese made according to the invention can be distinguished by having a CMP above that of cheese made by conventional processes, not in accordance with the invention. Typically, in standard, conventional cheese making about 0.05 wt.% of CMP will be present. In cheese made with the process of the invention, this is higher than 0.05 wt.%, such as 0.1 wt.% to 0.25 wt.%, such as 0.15 wt.% to 0.20 wt.%, e.g. about 0.17 wt.%. Particularly, these values can be obtained in cheese made according to the invention, without adding CMP.

In an interesting embodiment, the cheesemaking liquid is made from milk powder that has been obtained from heat treated (e.g. pasteurized) milk. Such powders generally comprise denaturized whey proteins. Prior attempts to make cheese from such powders, have suffered from the phenomenon that denatured whey proteins precipitate on casein. This adversely affects coagulation. The present process results in an increased coagulation rate, as a result from the higher protein concentration. As a result, the process of the invention allows proper coagulation, and accordingly successful cheesemaking, also in the event of a cheesemaking liquid comprising denatured whey proteins. This effect not only resolves an issue with prior cheesemaking from heat treated milk powders. It can also be used to further advantage, by specifically choosing to heat treat the milk or the cheese-making liquid in order to denature whey proteins. As a result of the aforementioned precipitation, such whey proteins become enclosed in the cheese-network. This leads to a higher cheese yield as compared to processes in which the whey proteins are removed as waste. This process has only become possibly by virtue of the addition of water onto the gel, as described hereinbefore.

The method of the invention provides for major differences with known cheese making processes. Firstly, by subjecting a more concentrated cheese forming liquid to coagulation than done hitherto, a cheese gel is formed that is fundamentally different from pre-existing cheese gels. Secondly, also after the gel formation the method of the invention provides for a major difference with known cheese making processes. The known process comprises cutting the gel, generally by traversing it with knives or wires to slice the coagulum into pieces. Generally, these pieces on average have a particles size, determined by sieving, reflecting average diameters of 4 mm to 6 mm. As a result of this process step, syneresis takes place, by which the coagulating matrix shrinks, and as a result forces liquid from the cut gel particles (generally cubes). Consequently, a two phase system of curd and whey results. In step (iv), the gel is cut into a cheese curd. Cutting a curd may involve manual or automated cutting. Manual cutting is done with cutting harps, made by stretching stainless steel wire over a stainless steel frame.

In the method of the invention, the use of high-solids cheese-forming liquid, essentially results in a gel that is difficult to cut. As noted before, such cutting can be done too early (when the curd is too soft), which would result in loss of milk components and thus counteracts the desire to have a better yield in cheese making. If the cutting is done too late, the curd will be too firm.

The present invention adds a step to the cheese making process, viz. the addition of water onto the gel, before the gel is being cut. The addition of water can also be accomplished simultaneously with cutting, or both prior to the cutting and during at least part of the cutting process. It is preferred to add water before the cutting starts. This provides the best results, by ensuring that no gel is cut without the presence of added water.

The amount of water to be added is relatively small. Generally, this refers to an amount of 5% by weight to 60% by weight of the total gel, such as 10% to 50% by weight of the total gel, such as 20% to 40% by weight of the total gel. In an interesting embodiment, the amount of water added is 10% to 20% by weight by weight of the total gel, typically about 15% by weight of the total gel. In another interesting embodiment, the amount of water added is 20% to 30% by weight of the total gel, typically about 25% by weight of the total gel. The water is added preferably by pouring or spraying it onto the gel. Preferably such water will have a temperature of from 5°C to 50°C, preferably 15°C to 40°C.

As noted above, in prior art processes, the washing water is normally used also in order to remove lactose. In several embodiments, the cheese-forming liquid in the method of the invention will already have a reduced lactose content. This has the additional advantage that a lower amount of water will be added than in prior art processes is needed as washing water. Preferably, cheese milk is employed from which 60 wt.% to 90 wt.% lactose is removed, such as 70 wt.% to 80 wt.%.

In an embodiment in which the cheese making liquid is concentrated milk, lactose is still present in relatively high amounts, meaning that the amount of water added also will judiciously be chosen to be in the higher parts of the above ranges.

The cutting itself can be conducted in a standard manner, known to the skilled person. Total cutting time typically does not exceed 10 minutes, preferably less than 5 minutes. The knives are generally pulled quickly through the curd so has to cut the curd cleanly.

Preferably, the water is not removed during this phase. This presents a further distinction with known cheese making processes based on enzymatic coagulation. In the traditional, known processes, whey is essentially removed after cutting curd, e.g. by suction. Generally, this is followed by one or more washing steps in which the curd particles are stirred with water. Washing results in the removal of washable components. These include valuable solid components, e.g. whey proteins and lactose. In the method of the present invention, syneresis takes place to a much lesser extent than in prior art cheese making. Consequently, the separating off of any solid components is reduced. This is another factor in the process of the invention that contributes to a desirably higher yield (i.e., less milk components are lost in cheese making). Having less to separate off, also saves also time, which allows making cheese with a reduced process time.

Accordingly, the invention turns an art-recognized problem with making cheese from highly concentrated (high-solids) cheese-forming liquids, into a benefit. The problem, as indicated above, is related to the fact that such high-solids liquids to have a relatively strong gel-forming tendency (based on a high coagulation rate). The present invention in fact accepts such a strong coagulation, and provides a process tool (viz. the addition of water prior to and/or simultaneously with the cutting of the formed gel) in order to still enable the making of cheese therefrom. By allowing the strong gel-forming as such, the incorporation of components from the cheese-making liquid into the gel is more complete.

In the process of the invention, regular additives can be provided to the cheese-forming liquid, such as salts (e.g. NaCl, CaCl₂), citrate, phosphate, additives (e.g. flavors or herbs), and other additions as known to the skilled person.

Where cheese is mentioned in the context of the present invention, it is understood as any type of natural cheese. The invention can be applied to any type of cheese. In a preferred embodiment, the invention relates to hard and semi-hard types of cheese, and most preferably to semi-hard cheese. The terms "hard" and "semi-hard" cheese are known to the skilled person, and is generally understood as referring to cheese which is subjected to ripening for at least 4 weeks. The invention can be suitably put to use in making cheeses of the soft, semi-hard, and hard types.

An examples of hard cheese is Parmesan, examples of semi-hard cheeses are Gouda, Edam, Maasdam, Cheddar and Emmental. Reference is made to IDF bulletin 141 1981 ISSN 0250-5118. Examples of soft cheeses are Camembert and Brie.

The invention has been found particularly suitable for Dutch type varieties such as Gouda, Edam and Maasdam, but also for making Feta cheese or Mozzarella. The Dutch type cheese is defined by Walstra et al. in chapter 2 of "Cheese: Chemistry, Physics and Microbiology, Volume 2, Major cheese Groups, ed. P.F. Fox, Chapman & Hall, ISBN 0 412 53510 6.

The invention is preferably applied in making goat cheese, more preferably of the Dutch type.

The invention is applicable to full fat cheese as well as to medium fat and low fat cheese. Many traditional cheeses have fat contents of more than 20 wt.%, typically up to 30 wt.% (based upon the total weight of the final cheeses). For example, a Gouda cheese has a fat content of about 30 wt.% (total weight). Alternatively, the amount of fat may be defined in terms of the dry solids content. For instance, the aforementioned Gouda cheese corresponds to about 50 wt.% based upon the dry matter (48+ cheese). According to their fat content, cheeses are classified as follows: high fat: fat in dry matter at least 60 wt.%, full fat: fat in dry matter at least 45 wt.%, but less than 60 wt.%, medium fat: fat in dry matter at least 25 wt.%, but less than 45 wt.%, partially skimmed: fat in dry matter at least 10 wt.%, but less than 25 wt.%, skim: fat in dry matter less than 10 wt.%.

The cheese made by the process of the invention can be distinguished from cheese not produced in accordance with the invention, by containing a relatively higher amount of at least one component that in traditional cheese making would be washed away, such as CMP as discussed above, minerals, ash.

The invention will hereinafter be further illustrated with reference to the following examples.

### Example 1

Goat milk is subjected to microfiltration (MF), applying a ceramic membrane, pore size 0.1µm, temperature 50°C. As a result, water and soluble components such as whey-protein, salts, and lactose are removed as a filtrate, leaving a more concentrated casein-milk as the retentate. This MF retentate is taken for further processing as cheese milk. The retentate has the following composition:
- Solids content 20 wt.%
- pH 6.2
- protein content 6.8 wt.%
- fat content 7.5 wt.%
- lactose content 2.9 wt.%.

The MF retentate (hereinafter indicated as "cheese milk") is transferred to a classic, circular open curd-making vat and pasteurized for 15 seconds at 75°C. After cooling to a temperature of 35°C, an amount of 200 ml/L cheese milk of calcium chloride is added. Further, a mesophilic starter culture is added consisting of *lactococcus lactis* and *lactococcus diacetylactis.* Next, rennet is added in an amount of 20 ml/100L cheese milk. The cheese milk is allowed to stand for 30 minutes in order for curd formation (gelation) to occur. After gel (curd) formation, water of 35°C is added om top of the gel, in an amount of 25% wt.% of the weight of the cheese milk used. It will be understood that the gel mass is substantially equal to the mass of the cheese milk used. It will also be understood that the density of the cheese milk does not substantially differ from the density of water (1 kg/L). I.e., the desired amount of water relative to the gel, can generally be determined equally by volume or by weight.

For a time period of 20 minutes, the gel is subjected to cutting, thereby mixing the added top water with the cut curd, so as to obtain a curd having an average diameter of 5 mm. After cutting, the curd is stirred for 1 hour, whereby syneresis occurs and whey is separated from the curd, until the desired percentage of moisture is obtained (generally after preparing the curd, the volume of the curd is about equal to the volume of whey), and excess lactose is washed away. The whey is drained off, and the curd is added into plastic cheese vats provided with a cheese net. The curd is pressed for 90 minutes and allowed to move around for 60 minutes. Thereafter, the cheese is salted with brine for 48 hours, resulting in a mild and semi-hard goat cheese having a pH of 5.30, a moisture content of 47%, a fat content calculated on dry matter solids of 48.5%, and a salt content calculated on dry matter solids of 3.4% (al percentages by weight).

### Example 2

Goat milk is subjected to microfiltration (MF), applying a ceramic membrane, pore size 0.1µm, temperature 50°C. As a result, water and soluble components such as whey-protein, salts, and lactose are removed as a filtrate, leaving a more concentrated casein-milk as the retentate.

From this MF retentate a milk powder is prepared (by regular evaporation followed by spray drying) having the following composition:
Dry matter solids: 95 wt.%
Fat: 43.4 wt.%
Protein 33.65 wt.%
Lactose: 12.5 wt.%

The powder is mixed with water of 45 °C in a weight ratio of 1 part of powder to 2 parts of water. This results in a cheese milk having the following composition:
Fat 10.85 wt.%
Protein 8,40 wt.%
Lactose 3.1 wt.%
Dry matter 23.75 wt.%.

The cheese preparation further is conducted as in Example 1, except that a curd making vat is used of the "double o" type (open vat).

### Example 3

Cheese milk is provided by dissolving full-fat milk powder obtained from goat milk. The powder is dissolved in water of 45°C in a weight ratio of 1 part powder to 2 parts of water in order to produce cheese milk.

A tiltable curd making vat from Alpma, type KBA, is used.

The composition of the cheese milk is:
- Fat: 10.45 wt.% (calculated on dry matter solids);
- Protein 8.80 wt.% (calculated on dry matter solids);
- Lactose 11.80 wt.% (calculated on dry matter solids).

The cheese milk is highly pasteurized for 2 minutes at 85°C, and cooled down to 35°C. A mesophilic starter culture (Bos culture) is added to the milk, as well as calcium chloride (200 ml of a 33% calcium chloride solution per 100 L of cheese milk). Thereafter rennet is added (20 ml per 100 L of cheese milk).

The cheese milk is allowed to stand for 30 minutes in order for curd formation (gelation) to occur. After gel (curd) formation, water of 35°C is added om top of the gel, in an amount of 100 wt.% of the cheese milk.

For a time period of 20 minutes, the gel is subjected to cutting, thereby mixing the added top water with the cut curd, so as to obtain a curd having an average diameter of 5 mm.

Whey is drained off (50% of the whey volume). In order to reduce the lactose content of the curd, water of 35°C is added again, in an amount of 150% of the remaining water volume.

After cutting, the curd is stirred for 1 hour, whereby syneresis occurs and whey is separated from the curd, until the desired percentage of moisture is obtained (generally 50% whey/50% curd), and excess lactose is washed away. The whey is drained off, and the curd is added into plastic cheese vats provided with a cheese net. The curd is pressed for 90 minutes and allowed to move around for 60 minutes. Thereafter, the cheese is salted with brine for 48 hours, resulting in a mild and semi-hard goat cheese having a pH of 5.30, a moisture content of 47%, a fat content calculated on dry matter solids of 48.5%, and a salt content calculated on dry matter solids of 3.4% (al percentages by weight.

## Claims

1. A method of making cheese, the method comprising providing a cheese-forming liquid, acidifying the cheese-forming liquid, subjecting the cheese-forming liquid to enzymatic coagulation to obtain a gel, cutting the gel so as to obtain a composition comprising curd particles, allowing the curd particles to form a curd block, and allowing the curd block to ripen into cheese, wherein the cheese-forming liquid is a high-solids casein-containing oil-in-water emulsion having a dry-matter solids content of 15 wt.% to 40 wt.%; the method comprising adding an amount of 5 wt.% to 40 wt.% of water onto the gel before or during the cutting.

2. A method according to claim 1, wherein the cheese-forming liquid has a dry-matter solids content in a range of from 20% by weight to 35% by weight, preferably of from 25% by weight to 30% by weight.

3. A method according to claim 1 or 2, wherein amount of water added to the gel is in a range of from 10% by weight to 30% by weight, preferably 15% by weight to 20% by weight

4. A method according to any one of the preceding claims, wherein the water is added to the gel prior to cutting the curd.

5. A method according to any one of the preceding claims, wherein the cheese-forming liquid comprises concentrated milk.

6. A method according to any one of the preceding claims, wherein the cheese-forming liquid comprises full-fat milk powder.

7. A method according to any one of the preceding claims, wherein the cheese-forming liquid comprises skim-milk powder and fat.

8. A method according to any one of the claims 5 to 7, wherein the milk is obtained from cow or goat.

9. A method according to any one of the preceding claims, wherein the cheese-forming liquid comprises casein powder, preferably Micellar Casein Isolate.

10. A method according to any one of the claims, wherein the cheese-forming liquid comprises vegetable fat.

11. A method according to any one of the preceding claims, wherein the cheese is a Dutch type cheese variety, preferably selected from the group consisting of Gouda, Edam and Maasdam.

12. A method according to any one of the preceding claims, wherein the cheese is goat cheese.

## Patentansprüche

1. Verfahren zum Herstellen von Käse, das Verfahren umfassend Bereitstellen einer käsebildenden Flüssigkeit, Ansäuern der käsebildenden Flüssigkeit, Unterziehen der käsebildenden Flüssigkeit einer enzymatischen Koagulation, um ein Gel zu erhalten, Schneiden des Gels, um eine Zusammensetzung zu erhalten, umfassend Bruchteilchen, Ermöglichen, dass die Bruchteilchen einen Bruchblock bilden, und Ermöglichen, dass der Bruchblock zu Käse reift, wobei die käsebildende Flüssigkeit eine hohe-Feststoff-kaseinhaltige Öl-in-Wasser-Emulsion ist, mit einen Trockenmassefeststoffgehalt von 15 Gew. % bis 40 Gew.-%; das Verfahren umfassend Zugeben einer Menge von 5 Gew.-% bis 40 Gew.-% Wasser auf das Gel vor oder während des Schneidens.

2. Verfahren nach Anspruch 1, wobei die käsebildende Flüssigkeit einen Trockenmassefeststoffgehalt in einem Bereich von von 20 Gew.-% bis 35 Gew.-%, vorzugsweise von von 25 Gew.-% bis 30 Gew.-%, hat.

3. Verfahren nach Anspruch 1 oder 2, wobei Menge von Wasser, zugegeben dem Gel, in einem Bereich von von 10 Gew.-% bis 30 Gew.-%, vorzugsweise 15 Gew.-% bis 20 Gew.-%, ist.

4. Verfahren nach einem der vorstehenden Ansprüche, wobei das Wasser dem Gel vor dem Schneiden des Bruchs zugegeben wird.

5. Verfahren nach einem der vorstehenden Ansprüche, wobei die käsebildende Flüssigkeit konzentrierte Milch umfasst.

6. Verfahren nach einem der vorstehenden Ansprüche, wobei die käsebildende Flüssigkeit Vollfettmilchpulver umfasst.

7. Verfahren nach einem der vorstehenden Ansprüche, wobei die käsebildende Flüssigkeit Magermilchpulver und Fett umfasst.

8. Verfahren nach einem der Ansprüche 5 bis 7, wobei die Milch von einer Kuh oder Ziege erhalten wird.

9. Verfahren nach einem der vorstehenden Ansprüche, wobei die käsebildende Flüssigkeit Kaseinpulver, vorzugsweise mizellares Kaseinisolat, umfasst.

10. Verfahren nach einem der Ansprüche, wobei die käsebildende Flüssigkeit pflanzliches Fett umfasst.

11. Verfahren nach einem der vorstehenden Ansprüche, wobei der Käse eine Käsesorte niederländischer Art ist, vorzugsweise ausgewählt aus der Gruppe bestehend aus Gouda, Edamer und Maasdamer.

12. Verfahren nach einem der vorstehenden Ansprüche, wobei der Käse ein Ziegenkäse ist.

## Revendications

1. Procédé de fabrication de fromage, le procédé comprenant les étapes consistant à fournir un liquide de formation de fromage, acidifier le liquide de formation de fromage, soumettre le liquide de formation de fromage à une coagulation enzymatique pour obtenir un gel, découpé gel de manière à obtenir une composition comprenant des particules de caillé, permettre aux particules de caillé de former un bloc de caillé, et permettre au bloc de caillé de maturer en fromage, dans lequel le liquide de formation de fromage est une émulsion huile-dans-eau contenant de la caséine à haute teneur en solides présentant une teneur en solides de 15 % en poids à 40 % en poids ; le procédé comprenant l'étape consistant à ajouter une quantité de 5 % en poids à 40 % en poids d'eau sur le gel avant ou pendant la découpe.

2. Procédé selon la revendication 1, dans lequel le liquide de formation de fromage présente une teneur en matières sèches dans une plage de 20 % en poids à 35 % en poids, de préférence de de 25 % en poids à 30 % en poids.

3. Procédé selon la revendication 1 ou 2, dans lequel la quantité d'eau ajoutée au gel est dans une plage de 10 % en poids à 30 % en poids, de préférence de 15 % en poids à 20 % en poids.

4. Procédé selon l'une quelconque des revendications précédentes, dans lequel l'eau est ajoutée au gel avant de découper le caillé.

5. Procédé selon l'une quelconque des revendications précédentes, dans lequel le liquide de formation de fromage comprend du lait concentré.

6. Procédé selon l'une quelconque des revendications précédentes, dans lequel le liquide de formation de fromage comprend de la poudre de lait entier.

7. Procédé selon l'une quelconque des revendications précédentes, dans lequel le liquide de formation de fromage comprend de la poudre de lait écrémé et de la matière grasse.

8. Procédé selon l'une quelconque des revendications 5 à 7, dans lequel le lait est obtenu à partir de vaches ou de chèvres.

9. Procédé selon l'une quelconque des revendications précédentes, dans lequel le liquide de formation de fromage comprend de la poudre de caséine, de préférence de l'isolat de caséine micellaire.

10. Procédé selon l'une quelconque des revendications, dans lequel le liquide de formation de fromage comprend de la matière grasse végétale.

11. Procédé selon l'une quelconque des revendications précédentes, dans lequel le fromage est une variété de fromage de type néerlandais, de préférence choisie dans le groupe constitué par le Gouda, l'Edam et le Maasdam.

12. Procédé selon l'une quelconque des revendications précédentes, dans lequel le fromage est du fromage de chèvre.
